Europäisches Patentamt

European Patent Office

Office européen des brevets

(11) Publication number: **0 280 039**
**A1**

# EUROPEAN PATENT APPLICATION

(21) Application number: **88100941.9**

(22) Date of filing: **22.01.88**

(51) Int. Cl.⁴: **G06F 15/40**

(30) Priority: **24.02.87 SE 8700770**

(43) Date of publication of application:
**31.08.88 Bulletin 88/35**

(84) Designated Contracting States:
**DE FR GB IT SE**

(71) Applicant: **International Business Machines Corporation**
**Old Orchard Road**
**Armonk, N.Y. 10504(US)**

(72) Inventor: **Norbäck, Lars Knut**
**Akerbärsvägen 28**
**S-181 64 Lidingö(SE)**
Inventor: **Wallmark, Ivar Erik**
**Krokusvägen 11**
**S-181 31 Lidingö(SE)**

(74) Representative: **Ahlman, Bertel et al**
**IBM Svenska AB Intellectual Property**
**Department**
**S-163 92 Stockholm(SE)**

(54) **Method for query handling in a data base system.**

(57) In a hierarchical data base a selectable part of a table can be accessed by a query user and displayed and stored as a query result. A plurality of transfer packages, each defining a transfer format and destination, are created and stored in a query data base. In a transfer dialog between the query user and the query data base, saved or new query results are combined with appropriate transfer packages for further transfer to local or remote destinations.

FIG. 1

**Method for query handling in a data base system.**

Technical Field.

The invention described relates to a method for query handling in a data base system and more particularily to a query handling method in a hierarchical data base system.

Background of the Invention.

In the description the following abbreviations will be used:
AS-Application System
CICS-Customer Information Control System.
DB2-Database2
DD-Data Definition.
DIF-Data Interchange Format.
DL/1-Data Language / One.
DOS-Disk Operating System.
ESDS-Entry Sequenced Data Set.
IMS-Information Management System.
IMS/VS-Information Management System/Virtual Storage
JCL-Job Control Language.
JES-Job Entry System
MVS-Multiple Virtual Storage.
SQL/DS-Structured Query Language/Data.
TSO-Time Sharing Option.
VSAM-Virtual Storage Access Method.
VSE-Virtual Storage Extended.

User of data base management systems, such as IBM IMS/VS and DL/1 DOS/VS, have developed substantial operational data bases. These support a variety of transaction and batch processing systems, including data entry and validation, real-time update and reporting on data at the detailed level.

These systems have traditionally been developed by the data processing department, using application development techniques and tools, in response to the known requirements of the users. This is the best approach for pre-planned and frequently-repeated operations against the data base.

However, this data can clearly have great value for information and decision support within an organization, beyond the scope of these pre-planned applications.

One method of achieving this is by the extraction of data from the operational files into relational tables, where it can be interrogated and analyzed in a number o ways, by the use of such IBM Programs as SQL/DS, DB2 and Query Management Facility. This approach can often be the most effective, since

• The data is physically separate from the operational data and query activity does not impact the performance of operational systems and transactions

• The data is static - a 'snapshot' of the business at a certain point which provides a consistent information base for repeated analyses

• The data may be edited and summarized during the extract process, so that it becomes more meaningful to the user

However, there is also the need for certain users to query data that is 'up-to-the-minute' rather than extracted. If such users can access the operational data bases directly and, without the intervention of the dat processing department, enter ad hoc queries and request on-off reports, then the value of that data can be increased and the day-to-day management of the business can be improved.

The present invention relates to a method for query handling in such a hierarchical data base system.

Prior art presentation

The published European patent application EP.100821 describes a method and apparatus for managing a data base including the use of various subsystems such as BATCH,TSO,CICS and IMS. The data bases used are of a relational type whereas the present invention relates to hierarchical databases.

A query management facility for hierarchical data bases is described in the IBM publication GU50-4001. According to this publication a number of query panels are stored in an auxiliary query data base, these panels are accessed sequentially by an operator at a terminal for setting up a query. The query is then executed whereby the queried table or a part of a table from the main hierarchical data base is displayed on the screen of the terminal.

One problem of the known query system is that the query result is only available to the query operator and not to the environment outside.

## Summary of the Invention.

The present invention is disclosed in the attached claims.

The invention as claimed is a query handing method whereby a query result is named and assigned to a query package defining a transfer format and destination.

An advantage of the invention is that a query result can be conveniently transferred to a local or remote destination.

## Brief Desription of the Drawings.

The present invention will now be described in detail below with reference to the drawings in which:

Figure 1 is a block diagram of a data processing system including a query facility according to the present invention.

Figure 2 is an example of a query result appearing on the screen of a display for a prior art system.

Figures 3a-3k disclose a number of query panels according to the present invention.

## Detailed Description of the Invention.

Fig 1 discloses a block diagram of a data processing system including a data processor 1, one or a plurality of hierarchical data bases 12 and 13, a query data base 14 and a number of user terminals 6 and 7.

A plurality of user terminals 6 can communicate via an application program located in a CICS (Customer Information Control System) subsystem 4 in the processor 1, with a data base 12. The data base 12 might be a hierarchical DL/1 (Data Language One) type data base, as described in the IBM General Information Manual GH20-1246. The data base 12 is operating under the control of a data base manager (DBM) 9. Similarily another user terminal 7 might communicate via another application program 18 and DBM 10 located in another subsystem IMS 5 with a second data base 13.

The users 6 and 7 are building up user information in the data bases 12 and 13 as table data according to well known methods. These tables, or selected parts of these tables, can then be accessed by a query user at a query terminal 8. Such a query operation is executed under a query program outside the working application programs.

The query terminal 8 is communicating over a subsystem, such as IMS 5, and the data base DBM 10 with a query data base 14. The query data base includes a directory 21, a plurality of panels 22, tables 23, saved results 24, predefined queries 25, transfer packages 26 and additional sections 27 not pertinent to the present invention. In the operation the query user 8 accesses a sequence of panels 22 for defining and building up a query. The query result is then accessed from the data base 13 (or 12) as indicated by the dotted line 16.

The query result can then be saved as a saved result in 24 and it can be attached to a transfer package in 26 for further transfer locally within the actual subsystem (IMS 5) or for external transfer to a host system (MVS 2, VSE 3) destination, such as to a mail point, as will be described later.

It should be considered that any of the user terminals 6 or 7 might also temporarily operate as a query terminal.

It should also be considered that both MVS 2 and VSE 3 are operating systems for controlling both or any of the subsystems CICS 4 or IMS 5.

Fig. 2 discloses an example of a query result as it can appear on the screen of the query terminal 8 in fig. 1. The result includes headings such as ORDER DATE, CUSTOMER, PART NUMBER and QTY PERIOD. It represents a table of information collected from the hierarchical data base 12 or 13 in fig.1, being useful for the query operator.

Fig.3a discloses a first panel, a HOM (home) panel, to be accessed by the query user 8 in a sequence of accesses from the query panel library 22 in fig.1. This panel offers a number of choises for the user. In case he want to start a new query he must type a "c" in front of the line "New Query". This position marked with "_" is in a command column. After typing the "c" the operator depresses a start key, ENTER. The command "Start a new query" will then be executed by the query program.

The query operator may select the "Predefined Queries" by typing a "c" in the command column for the second line, and then press the ENTER. This is for selecting or erasing predefined queries in section 25 in the query data base 14. The user may similarily select any other line on the panel for modifying, saving, transferring or for performing other actions to be described later, if pertinent to the present invention.

In addition to the above line commands the query user may depress a Program Function (PF) key on the bottom of the screen. Actuation of PF1 will change the panel to a help panel, from which the operator can go back to the HOM panel if appropriate. Similarily the other PF keys can define other operations such as "Perform", "End" and "Route".

In case the query operator has selected the first line "New Query" on the HOM panel, fig.3a, a panel MAI for input identification will be accessed by the query program from the panel library 22 in the query data base 14. It will appear on the screen of the terminal 8. This panel is shown in fig.3b.

The data to be queried is stored in the data base 13, or in a plurality of data bases, in the form of data elements located in a segment. Each data base comprises a number of segments and each segment comprises a number of data elements, hence the concept hierarchical data bases. The various data bases, segments and data elements are identified in the query data base by names stored in tables 23, fig.1. The user can now select the first line and type the names for the wanted data base, segment and data elements on corresponding lines, if known to him. He will then press ENTER and the input will be identifyed to the query program.

In case the user had selected "Saved Results" on the HOM panel on fig.3a instead of "New Query", he can now select "Saved Results" and type the name of the saved result on the "Results" line for further processing of this result.

Often the query user does not know the exact names of the data base, segments and data elements he want to access. In case the data base name is missing on panel MAI fig.3b, a panel DBS (Data Base Selection), not shown, will be accessed from the panel library 22, when ENTER is pressed for the MAI panel. The DBS panel identifyes the various available data bases and the user can select the appropriate one. Then a SEG (Segment) selection panel will appear, in case the appropriate segment is not known. The next panel in the sequence is a data element panel.

Before the query can be performed there might still be needed additional information to be defined on subsequent panels such as DDU (Definitions of Names), SCM (Selection Criteria) for row selection, FRP (Headers and Columns) and FRA (Accumulation) for a total sum accumulation. It should also be considered that the user can always return back to a previous panel by pressing the PF3 end key for making changes in a previous panel in the sequence.

Fig.3c discloses a panel XEQ (Performing the query) for the execution of the query, when all previously described query definitions have been made. The query user may now press the PF2 key for performing an online query. The query program will then access the data base 13 and access the defined table or table window and display it on the operators screen. This query result might look like the screen on fig.2. The result can later be saved, printed or transferred.

In case the the operator want to transfer this query result he must type a "c" on the command column in front of the line "Transfer the result" and type a transfer package name on the line "Transfer package:    ". The operation mode will now be turned into offline. The operator must also type a resultname on the "Name" line to perform the query. The operator may also select to save or print the result instead of transfering the result.

A query result saved, by selecting "Save the result" on the XEQ panel, will be stored in section 24 in the query data base 14. Such a saved result can be transferred by selecting "Saved Results" on the HOM panel in fig.3a. A panel SRM "Saved Results" fig.3d will then be accessed by the query user (operator). The SRM panel displays a list of saved results, each including a result name and a description. The user selects a result for transfer by typing a "t" in the command column for the selected query result. Alternatively he can erase, look at or print a result.

In case no transfer package name was typed and "Transfer the result" was selected on the XEQ panel, fig. 3c, a panel XTR for "Package Selection for Tranfer" will be accessed. This XTR panel is disclosed in fig.3e. For the abbreviations used in this figure reference is made to the abbreviation listing in the beginning of the description.

The XTR panel discloses a list of available transfer packages. A transfer package is a record af data defining the transfer format and destination for a query result to be transferred. A plurality of transfer packages are stored in section 26 in the data base 14. Such a package can be accessed and attached as header information to a query result before transferring the query result to a destination.

The query user may choose a package in the XTR panel by typing a "c" in the command column and then pressing the PF2 key. He can also look at or modify a package by typing a "c" and pressing ENTER or he may discard a package by typing "/" in the respective command line and pressing ENTER. The operator also has the opportunity to start a new package definition by just pressing ENTER.

The XTR panel will also be accessed if the query user selects a saved result to be transferred in panel SRM in fig.3d. He can then select a package and press P2 to choose a package for execution.

It should be noted that the description for the various selections on the XTR panels in fig.3e are examples only. The following rules apply for the use of the XTR panel:

The perform option, pressing PF2, will not be available if the transfer package definition was started by routing to this panel from panel HOM. The second text line is then not shown, and the first text line will be: 'You have requested the creation of a Transfer/Print Package'.

By modification of a packet in the panel text above, is meant that an existing package is used as a base for changes, and saved either under the same or under a new name.

By making a copy (saving an existing, unchanged transfer under a new name) of an existing common transfer package down the list, the user can cause the transfer package to appear earlier on the selection list on this panel (saves scroll time if the transfer package is used often and the list is long). User defined packages will appear in front of common packages. A user defined package can have the same name as a common transfer package. Common packages are shown separate from packages defined by the user. The erase option is not available for common packages and the erase line on the panel is then not shown.

A common package is a transfer packet created by a query system administrator when the query system is installed or designed for use by the query user.

Each transfer package name defines a combination of destination and format of the result. Each format is stored as an entry in a Format Table, and each destination in turn is stored as an entry in a Destination Table. The Format and Destination Tables are stored in section 23 in the data base 14.

The different alternatives to continue from this panel are:

• If a transfer package is selected and "PF2" pushed, the user will be prompted for missing information, in case the transfer package was not complete when it was saved. If no more entries are required, the transfer is scheduled for execution.

• If a transfer package is selected and "ENTER" pushed, the next transfer definition panel in sequence (XFS), fig 3f, will be shown with the format of the selected transfer package filled in. By continued use of "ENTER" and "PF3" the user can go between the different panels that make up a particular transfer package definition, to look at and/or to modify.

• If "ENTER" is pushed with no transfer package selected, the XFS panel will be shown with no format filled in. The user must then go through all transfer package definition panels for a complete definition.

The next panel XFS "Format Selection", fig.3f, will be accessed when the user has pressed ENTER on the XTR panel or PF3 key on the next panel, the Destination Panel XDS fig.3g, to be described. The operator may now choose between various available formats, examples only, on the panel. The transfer formats are defined in the Format Table in the table section 23 of the query data base 14.

The first text line might also be: "You have requested the creation of a new transfer package".

The Destination Panel XDS, fig.3g, will be displayed when the user has pressed ENTER on the XFS panel or has selected an option on any another panel that calls for a "destination selection" as the next operation. The destination selection is performed by selecting any of the available destination rows by a "c" command. These destinations, such as various printers, datasets, PCs and mail points are examples only.

The first text line might also be:"You have requested the creation of a new transfer package".

A mail point destination is a message queue in the subject subsystem from which a query result can be transferred over a data network or other communication media to another destination node.

The XDS panel is shown twice if the format selected in the format panel XFS, fig.3f, calls for two destinations.

The transfer destinations are defined in the "Destination Table" in the table library 23 in the data base 14.

The next panel in the sequense is XDD, External Destination Name for the Result, fig.3h. This panel will be accessed if the destination selected in panel XDS is an external destination which in the Destination Table explicitly has been specified to require a name. This name should be entered on the name line as specified on the panel. Optionally a VSAM catalog name can be specified if appropriate.

In case the user has selected a local destination on the destination panel XDS, fig3g, a panel XLS, Local Destination Name Selection for the Result, fig.3i, will be accessed. On this panel a number of local destinations, such as terminal printers, are available for selection. Again, the various options are examples only.

The last panel in the panel sequence is XSP, Saving the Package, fig.3k. This panel is shown when all appropriate destination panels (XDS,XDD,XLS) have been sucessfully passed. The transfer of the requested result name will be performed by pressing the PF2 key.

Saving of a created transfer package can be accomplished by typing a package name and optionally a package description and then pressing ENTER. The saved transfer package is stored under this name in section 26 in the data base 14 and can later be accessed for another transfer. It will then appear as a new line in the package list in the panel XTR in fig.3e.

The query program is performing a requested transfer of a query result by accessing a subprogram for formatting the query result into the format defined by the accessed transfer package.

An example of the operation for defining a transfer package will now be described as a dialog between the query user and the query data base 14.

The query user at the terminal 8 will start the operation by accessing the home panel, HOM in fig.3a. He selects the line "Transfer Packages" and pushes the ENTER start key. The XTR panel "Package Selection for Transfer", fig.3e will then appear on the screen of the user. It is assumed that none of the listed packages can be modifyed to suit the requirements for the new package. Therefore the user presses ENTER to start a new definition. As a result the format selection panel XFS, fig.3f will appear. It is assumed that the user selects the line PRTFMTA4 at the end of the list, for a print format with page dimensions A4. When he presses ENTER the destination selection panel XDS fig.3g will be displayed as the next panel in the sequence. He might now select LOCPRT for a local printer and press ENTER. Next the panel XLS, fig.3i, for local destination will be shown. He might now select "termidy" for a Terminal printer M5, type xx. When he presses ENTER the last panel XSP for Saving the Package will appear on the screen. The query user has now created his package and he must give it a characteristic name, such as PRTA4M5. He will type this name on the line "Name of Package" and on the description line he might type "Terminal printer M5, type xx" from the previous XLS panel. When the user presses ENTER the created new package PRTA4M5 will be saved in section 26 in the data base 14. This package will then appear at the top or at the bottom of the list in the XTR panel next time this XTR panel is accessed.

Next an example of a transfer operation starting from a new query will be described.

The operation will again start from the HOM panel in fig.3a. The query user now selects the line "New Query" and presses ENTER. The following panel in the sequence will be the MAI panel in fig.3b. On this panel the user defines his query source, such as data base, segment and data element. He might still define more accurately his query in subsequent panels for heading, accumulation etc. information. When the query is complete, the XEQ panel fig.3c for performing the query will be displayed. The user might now perform the query on line by pressing the perform key PF2. The query result as in fig.2 will then be shown. This result can later be saved or transferred.

In case the user wants to transfer the query result immediately he types a query result name, selected by himself, and selects the line "Transfer the result" by a "c". In case he knows the name of the appropriate transfer package he will type this name on the line "Transfer package:" and press ENTER. The query result will then be both displayed and transferred, in an offline mode of operation. If, however the user does not know the transfer package name he will leave the transfer package line empty. Then the package selection panel XTR in fig.3e will be shown. In case the user finds a suitable package on the list of this panel, he will select such a package and press PF2. The new query result will then be transferred in accordance with the format and destination defined by the package. This is, however, true only if the selected package contains all necessary destination name information. If not, a panel such as XDD or XLS in figs.3h and 3i will be accessed for a more precise destination definition.

In case the user has not found a suitable package in the XTR panel list, he has to define a new package using the panels XFS, XDS, XDD, XLS and XSP as described above. The only difference is that when the user has typed the package name and description in panel XSP fig.3k, and then presses ENTER, both the created package will be saved and the new query result will be transferred in the format and to the destination defined by the created package.

It should be considered that the described transfer packages can be divided into two groups, normal transfer packages and print packages. This is indicated in fig. 3a by two lines "Transfer Packages" and "Print Packages". In such a case at least an additional panel for "Package Select for Print" should be accessable corresponding to the XTR panel in fig. 3e.

It should also be considered that several query users can access the same transfer packages in section 26 in the query data base 14. Alternatively each user owns his own packages accessable only by this user identification (user id.). In most cases, however, the best solution is that a plurality of transfer packages are common to all query users, whereas each user has a number of own packages assigned to himself only.

An example of Model Statements for transfer of query packages to external destinations out of the local subsystems CICS 4 or IMS 5 will now be given with reference to IBM operating systems VSE and MVS. VSE is described in IBM General Information Manuals GH12-5128 and GC33-6106. MVS is described in IBM General Information Manual GC28-1118. A Job Entry Subsystem (JES) is described in IBM General Information Manuals GC23-0010 and GC23-0039.

All transfer out of CICS or IMS, will be by means of writing a job stream to the JES/POWER Internal reader. The job stream will contain the data, after a SYSIN DD * card.

The data in a job stream must be in form of 80 byte records. As the result is not in 80 byte records one or two job steps are needed.

• Step 1 is a new program, which reads the SYSIN DD ˙ data, chopped into 80 byte records. The data also contains control record(s) telling the correct record length. The input records are glued together into correct length records and written to either a temporary file when the destinations is a VSAM file or user supplied job step executing e.g. a user application program, or to a sequential destination (sequential file, PDS, mail, or system printer).

• Step 2 is the IDCAMS copy program that writes to a VSAM file, or a user supplied job step. It reads the input from the temporary file.

Model statement members are needed to construct the different JCL combinations for the job that will write to the different types of destinations. The model statements will be different in MVS and VSE. The model statements are/contain (in order of usage within a job):

JCL from the following two models will precede each set of data to be transferred. The job step glues the input records (80 bytes long) together into variable length records and writes them out somewhere (defined by a model statement containing an output DD card).

1. A JOB card skeleton (or usable JOB card).

2. A set of JCL cards starting with a glue program EXEC card, possibly followed by DD cards and ending with a SYSIN DD ˙ card.

The next JCL card and one of the thereafter following 8 JCL cards will always follow the data, ending job step one.

3. An End Of Data card.

4. A DD card that defines a temporary file.

5. A DD card for output to a new sequential dataset.

The DSN or SYSOUT parameter on the different output DD cards are symbolic parameters. By defining new models and using them from new external destination types the installation can define fixed DSN or SYSOUT names. The name should then not be typed on panel XDD (according to definition in the Destination Table entry).

The SPACE parameters for new datasets are set fixed.

6. A DD card for output to an old sequential dataset. Old contents are replaced.

7. A DD card for output to an old sequential dataset. The data written is appended.

8. A DD card for output to a new PDS.

9. A DD card for output to an old PDS.

10. A SYSOUT DD card used when sending the data to a mail point. The SYSOUT parameter is set fixed.

11. A SYSOUT DD card used when printing on a system printer.

In case a second job step is needed to write to a VSAM ESDS dataset, one of the following two JCL sets will follow job step one. These sets makes out a complete second job step.

12. A set of JCL cards starting with an IDCAMS program EXEC card, followed by DD cards to write to an old VSAM ESDS dataset with data replaced.

13. A set of JCL cards starting with an IDCAMS program EXEC card, followed by DD cards to write to an old VSAM ESDS dataset with data appended.

All jobs will be ended by the following JCL card.

14. An End Of Job card.

## Claims

1. Method for query handling in a data base system, the system including a hierarchical data base to be accessed by a plurality of application program users and by a query user, and a query data base including a plurality of panels and tables, the method including the steps of,
forming a query by accessing a first sequence of panels in the query data base by the query user and by inserting query defining data into the accessed panels,
performing the query on the defined data by accessing the hierarchical data base from the query user, the accessed data forming a displayable query result,
defining a transfer package for the query result by accessing a second sequense of panels in the query data base and by inserting transfer package defining data, including name, format and destination, into the second sequense of panels, and
transfering the query result in the format and to the destination defined by the transfer package.

2. Method according to claim 1, wherein at least a first panel in the second sequence displays a list of selectable transfer packages.

3. Method according to claim 2, wherein at least a second panel in the second sequence displays a list of selectable formats.

4. Method according to claim 3, wherein at least a third panel in the second sequence displays a list of selectable destinations.

5. Method according to claim 2, wherein a query result can be transferred in a selected format to a selected destination by selecting an appropriate transfer package from the list and pressing a start key.

6. Method according to claim 4, wherein a new transfer package can be created by selecting an appropriate format on the second panel and an appropriate destination on the third panel.

7. Method according to any previous claim, wherein a number of transfer packages, format tables and destination tables are stored in a query data base.

8. Method according to claim 7, wherein each selectable transfer package in the list of the first panel corresponds to a stored package, each selectable format in the second panel corresponds to a format table entry and each selectable destination in the third panel corresponds to a destination table entry.

9. Method according to any previous claim, wherein the query handling is performed as a dialog between the query user and the query data base for saving and modifying query results, creating and modifying and saving transfer packages and for attaching a selected transfer package to a new query result or to a saved query result.

FIG. 1

```
                              RESULT PAGE 1                      IQDS : XRP
The query is complete.
ORDER     CUSTOMER               PART                    QTY .
DATE                            NUMBER                 PERIOD
                                                            1
12/12/81  WOODS AND CO.         02250239                  0.25
                                023013405-002             0.50
18/12/81  SMITH AND SON         02250241-001              7.00
                                02250891                 10.00
                                023013412                 2.50
29/12/81  W. B. JONES           02250236-001              4.00
                                023003802                 0.50
Final accumulations

*** End of result ***                     Total          24.75




Press "ENTER" for KEEPING THE RESULT.
```

## FIG 2

```
HOM                              QUERY.DL/I

Type "c" by the action you want, then press ENTER.

    _ New Query              Start a New Query
    _ Predefined Queries     Select or erase Predefined Queries
    _ Modify                 Modify the Query
    _ Save                   Save the Query

    _ Saved Results          Process Saved Results
    _ Progress Reports       Check or change status of off-line actions
    _ Sign On                Sign on to another userid

    _ Transfer Packages      Define or maintain Transfer Packages
    _ Print Packages         Define or maintain Print Packages

    _ Tutorial               Start a New Query with tutorial




   PF 1 Help      2 Perform   3 End     4 Route     5          6
   PF 7           8           9         10          11         12
```

## FIG 3A

```
 MAI  .                          IDENTIFYING INPUT
Type "c" by the kind of data you want to be queried and, if you know,
type the names of the data items, then press ENTER.

   _ Data Elements of Segments in Data Bases

     Data Bases:      _____

     Segments:        _____
                      _____
     Data Elements:   _____
                      _____
                      _____
                      _____

   _ Saved Results

     Results:         _____


 PF 1 Help        2 Perform    3 End        4 Route      5           6
 PF 7             8            9             10           11          12
```

FIG  3B

```
 XEQ                          PERFORMING THE QUERY
You may perform the query online or offline.  .

Online:  Press "PF2" to perform the query and see the result.
         The online result can later be saved, printed, or transferred.

Offline: Type a name to perform the query and "c" by the actions you want
         then press ENTER. The online result will then be canceled.

         Name: _____

           _ Save the result
             Description: _____

           _ Print the result
             Print package:     _____

           _ Transfer the result
             Transfer package: _____

 PF 1 Help        2 Perform    3 End        4 Route      5           6
 PF 7             8            9             10           11          12
```

FIG  3C

```
SRM                    SAVED RESULTS            _

The following results have been saved for user &userid.
Type "/" by a result to erase it.
Type "?" by a result to see it on the panel.
Type "p" by a result to have it printed.
Type "t" by a result to have it transfered.
Press ENTER.

     _ Result 1
     _ Result 2          Description of result 1
     _ Result 3          Description of result 2
     _ Result 4          Description of result 3
     _ Result 5          Description of result 4
     _ Result 6          Description of result 5
     _ Result 7          Description of result 6
     _ Result 8          Description of result 7
     _ Result 9          Description of result 8
                         Description of result 9


PF 1 Help      2 Perform 3 End       _ 4 Route    5           6
PF 7           8           9           10          11          12
```

## FIG 3D

```
XTR              PACKAGE SELECTION FOR TRANSFER

You have requested a transfer of  resultname.
Type "c" and press PF2 to choose a package for execution.
Type "c" and press ENTER to look at or modify a package.
Type "/" and press ENTER to erase a package.
To start a new definition press ENTER.

     NAME          DESCRIPTION
   - ASNEW         AS data to user defined datasets.
   - ASNEWNN       AS format, New PDS
   - DIFPC         DIF format to users PC.
   - DIF1          DIF format to predefined seq. file.
   - DIF2          DIF format to new seq file.
   - SEQNEW        Default format, New seq file.
   - VSAMOLDN      Format x, Old VSAM ESDS, Repl.
   - PRTxMAIL      Print format x, Mail, Prompt for mail point.
   - PRTxFILE      Print format x to user defined dataset.
   - DIFPRINT      DIF format to users terminal printer.

PF 1 Help      2 Perform 3 End       4          5           6
PF 7 Previous 8 Next      9           10          11          12
```

## FIG 3E

```
XFS                  FORMAT SELECTION

  You have requested a transfer of &resultname.
  Type "c" and press ENTER to choose a format.

       NAME        DESCRIPTION
    - ASFMT        AS format, two destinations required.
    - DEFFMT       Default format, one destination required.
    - PCDIFFMT     PC DIF format, only result generated.
    - IXFFMT1      IXF format, data and data description together.
    - IXFFMT2      IXF format, fixed destination.
    - PRTFMTxx     Print format, page dimensions xx.
    - PRTFMTA4     Print format, page dimensions A4.
    - Name         ......


  PF 1 Help       2 Perform 3 End      4           5           6
  PF 7 Previous   8 Next      9          10          11          12
```

FIG 3F

```
XDS          DESTINATION SELECTION FOR THE RESULT

  You have requested a transfer of &resultname.
  Type a "c" by the NAME you want and press ENTER.

      NAME        DESCRIPTION
    - LOCPRT       Local printer
    - SYSPRT       System Printers
    - SEQOLD       Sequential dataset, name = userid.TEMP.
    - PDSNEW       New PDS, prompt for dataset(member) name.
    - PDSOLD       PDS, name = pdsname, member name = userid.
    - SEQNEW       New sequential dataset, prompt for name.
    - SEQAPP       Sequential dataset, name = seqname, data appended.
    - USERPC       Users PC.
    - MAIL1        Mail to node(userid).
    - MAIL2        Mail, prompt for node(userid).
    -   ,          ......


  PF 1 Help       2 Perform 3 End      4           5           6
  PF 7 Previous 8 Next      9            10          11          12
```

FIG 3G

```
XDD        EXTERNAL DESTINATION NAME FOR THE RESULT

You have requested a print of &resultname.
Please type the name you want and press ENTER.

The selected destination is:

   Destname  Description (as selected on panel XDS).


Enter the name of the destination here:
   _____


Enter the name of the VSAM catalog here:
   _____


PF 1 Help      2 Perform 3 End       4          5          6
PF 7           8         9           10         11         12
```

## FIG 3H

```
XLS     LOCAL DESTINATION NAME SELECTION FOR THE RESULT

You have requested a transfer of &resultname.
Type a "c" by the NAME you want and press ENTER.

   NAME       DESCRIPTION
 - termidx    Terminal printer M3, type xx
 - termidy    Terminal printer M5, type xx
 - termidz    Terminal printer M3, type yy
 - .......    ........................

PF 1 Help       2 Perform 3 End       4          5          6
PF 7 Previous   8 Next    9           10         11         12
```

## FIG 3I

```
 XSP                     SAVING THE PACKAGE

 You have requested the transfer of &resultname.

 Press PF2 to perform your package without saving it.

 Type a name, and if you want, a description, and press ENTER,
 to save and perform the package.


    Name of Package: _____


    Description:

    ----------------------------------------------------------


 PF 1 Help      2 Perform 3 End        4           5         o
 PF 7           8         9             10          11        12
```

FIG 3K

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A,D | EP, A2 0100821 (INTERNATIONAL BUSINESS MACHINES CORPORATION) 22 February 1984 | 1-9 | G 06 F 15/40 |
| | | | |
| | | | **TECHNICAL FIELDS SEARCHED (Int. Cl.4)** |
| | | | G 06 F |

The present search report has been drawn up for all claims

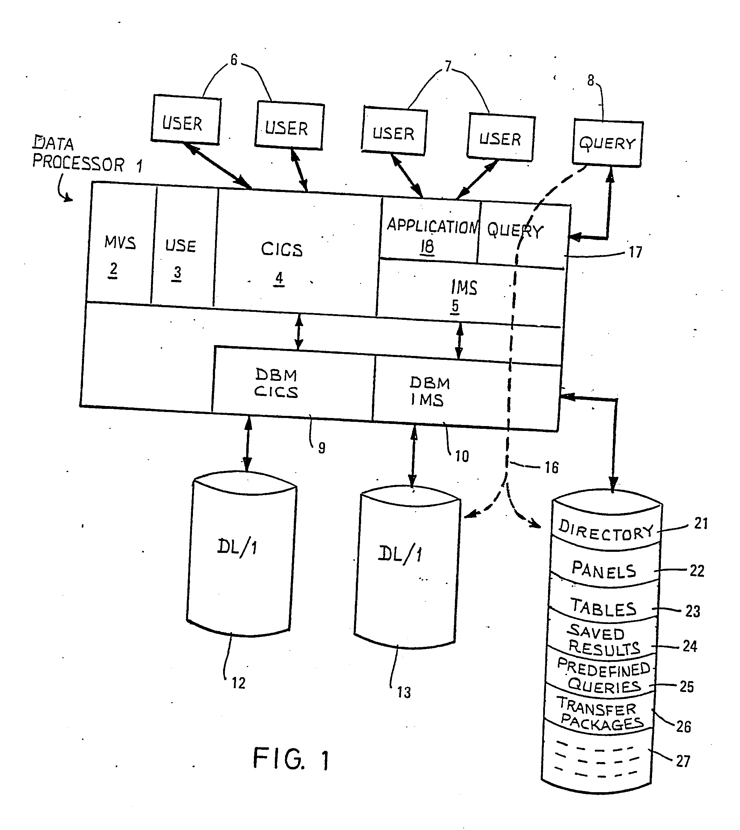

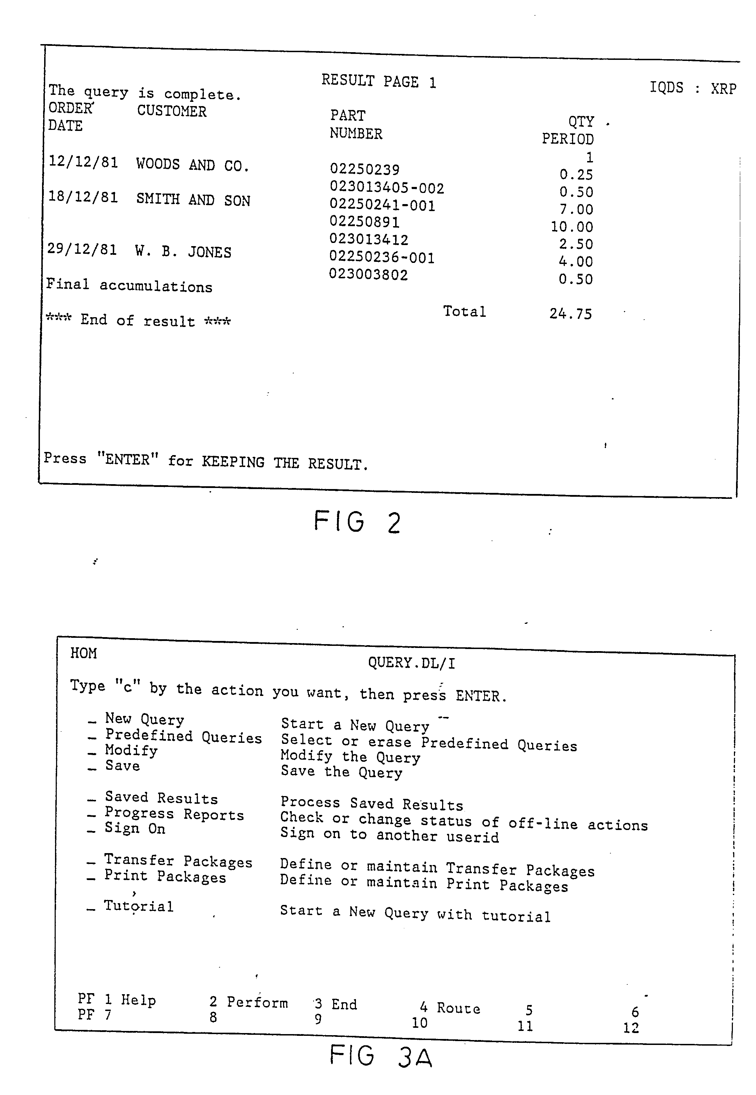

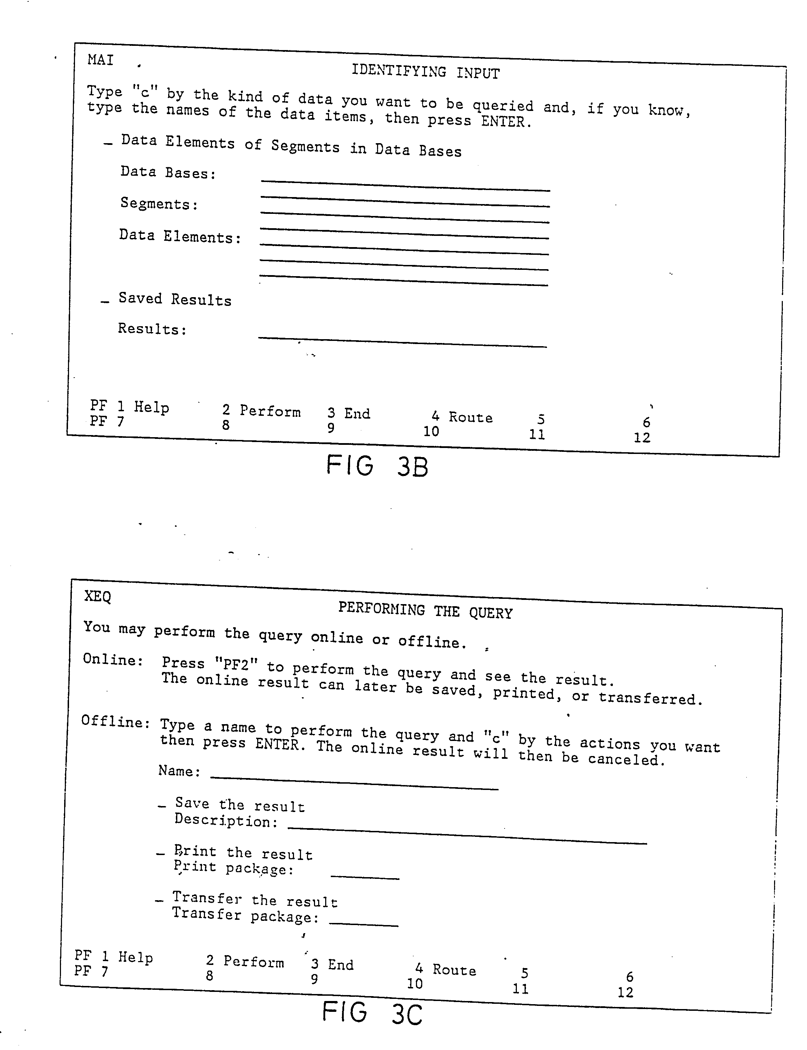

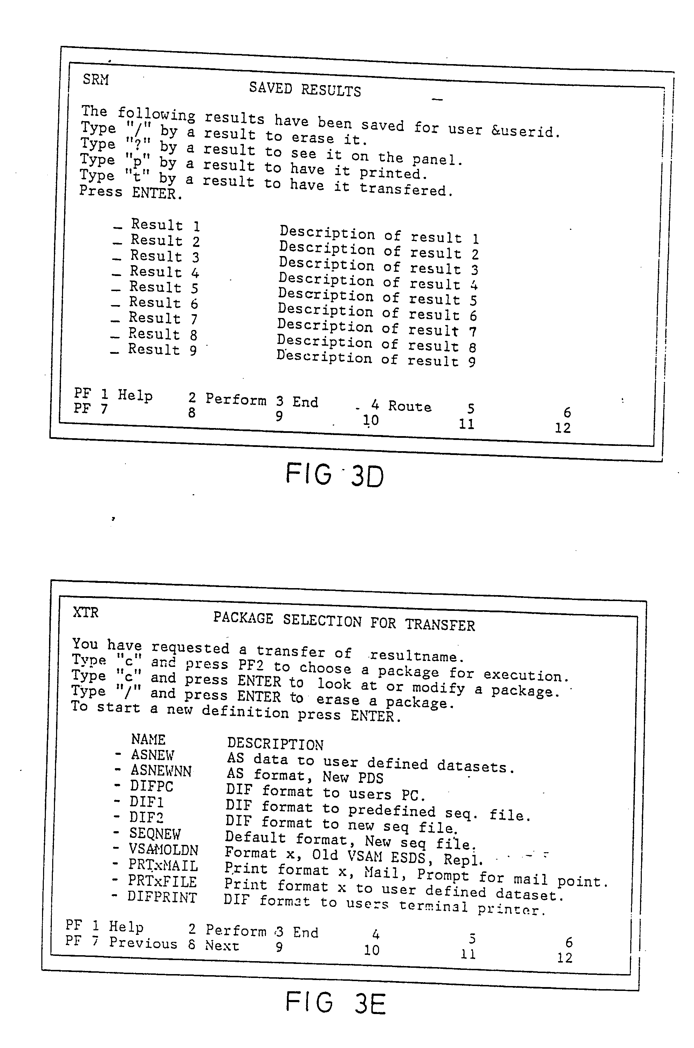

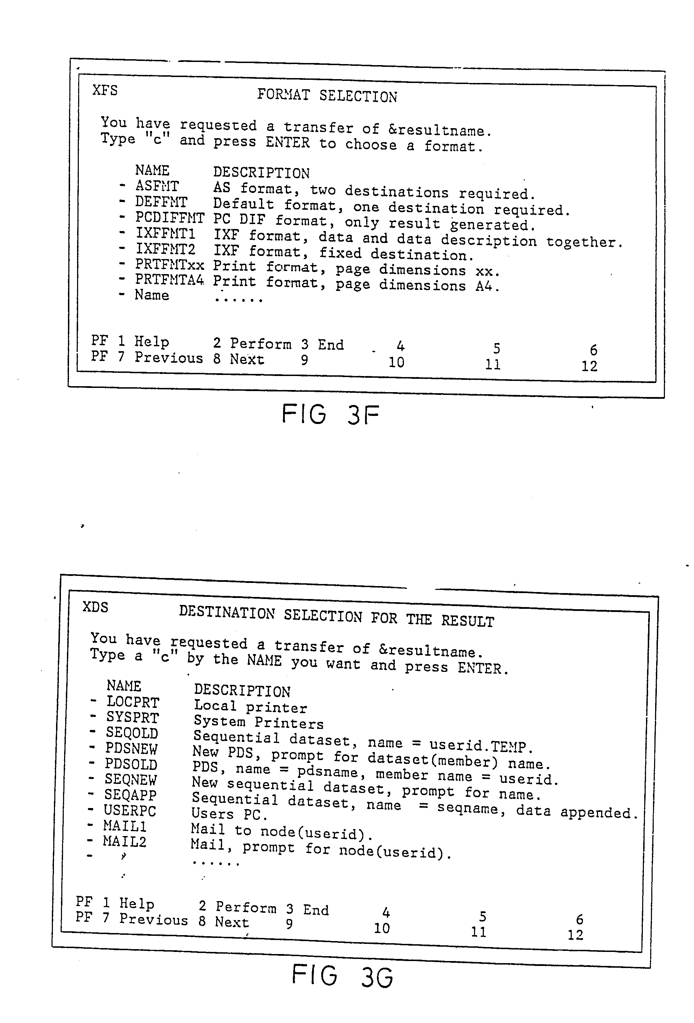

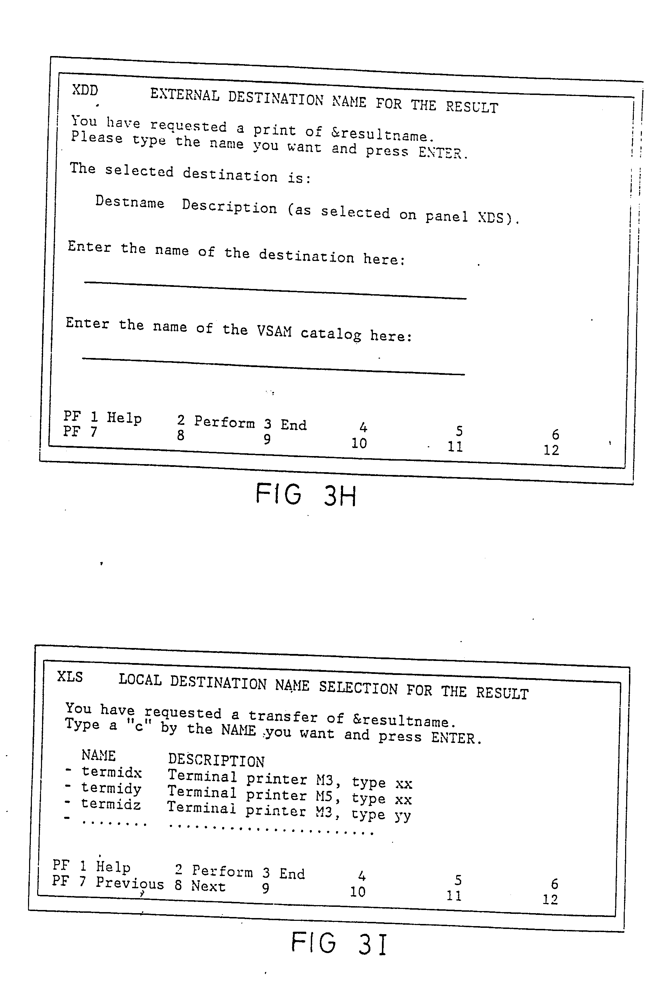

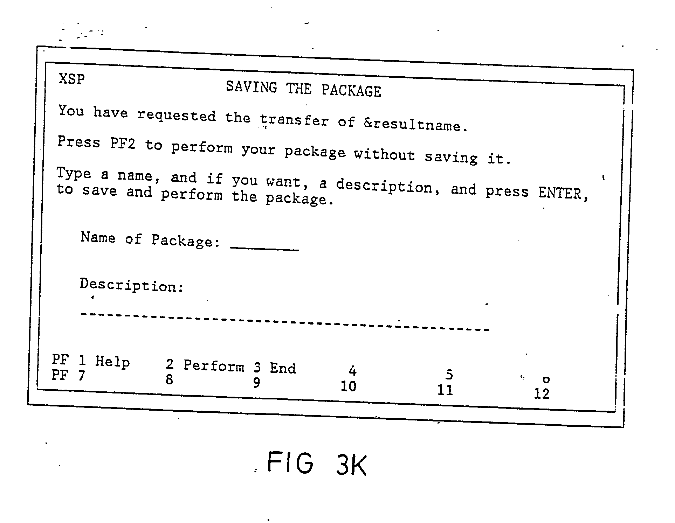

| Place of search | Date of completion of the search | Examiner |
|---|---|---|
| STOCKHOLM | 16-05-1988 | SILFVERLING J |